Europäisches Patentamt

(19) European Patent Office    (11) Publication number:    0 171 747

Office européen des brevets    A2

(12) EUROPEAN PATENT APPLICATION

(21) Application number: 85109928.3    (51) Int. Cl.⁴: G 06 K 11/06

(22) Date of filing: 07.08.85

(30) Priority: 14.08.84 US 641131    (71) Applicant: METAPHOR COMPUTER SYSTEMS
                                      1965 Charleston Road
                                      Mountain View California 94043(US)

(43) Date of publication of application:
19.02.86 Bulletin 86/8    (72) Inventor: Hong, Jack Louie
                            20324 Pinntage Parkway
                            Cupertino California 95014(US)

(84) Designated Contracting States:
AT BE CH DE FR GB IT LI LU NL SE    (74) Representative: UEXKÜLL & STOLBERG Patentanwälte
                                      Beselerstrasse 4
                                      D-2000 Hamburg 52(DE)

(54) Cordless intelligent mouse.

㊄ A cordless mouse pointing device (16) communicates to a base station receiver (222) across free space. An infrared beam is modulated by a serial data output (188) containing information specifying the displacement and status of the mouse pointing device (16). The mouse pointing device (46) is battery-operated, but may optionally be connected to the base station with a cord (40). The cord (40) communicates data between the mouse (16) and the base station (12) as well as provides power from the base station (12) to recharge the batteries (86) of the mouse (16) and to power the mouse (16). A low-voltage sensing device (48) in the mouse (16) determines if the batteries (86) are nearly exhausted, this information being transmitted to the base station (12) to warn a human user. If the mouse pointing device (16) is not used (and its buttons (28, 30) are not pushed) for a predetermined period of time, the mouse (16) switches off many of its active circuits to preserve battery power (i.e., it "goes to sleep"). Before going to sleep, the mouse (16) transmits a sleep notification packet (188) to the base station (12) to inform the user that the mouse (16) has gone to sleep and must be awakened again (i.e., by depressing one of the mouse pointing device buttons 28, 30) before it can again be used.

./...

Croydon Printing Company Ltd

*Fig. 1*

## CORDLESS INTELLIGENT MOUSE

### Field of the Invention

The present invention relates to input peripheral devices which communicate input data to a computer system. More particularly, the present invention relates to an electronic mouse pointing device which supplies positional information to a computer system.

### Background of the invention

It is often useful for a user interacting with a computer system to input to the system indicia of a position on the system display screen. For example, text editing can most easily be accomplished by first displaying the text to be edited on a visual display device and then inputting to the system pointing information specifying the portions of the displayed text which are to be edited together with commands specifying one or more operations to be performed on those specified portions of text (e.g. delete, move, insert, etc.). The user, in effect, interacts with the system via both the display and an input peripheral device which specifies a position on the display. The system typically displays a cursor or other pointing symbol on the display which visually indicates the position on the display to which the user has pointed, permitting the user to worry only about relative (rather than absolute) display position.

Many computer systems in the past were provided with a single alphanumeric keyboard as the only input peripheral device through which a user could interact with the system. Alphanumeric keyboards are typically provided with cursor control keys (up-arrow, down-arrow, left-arrow and right-arrow) to facilitate pointing to locations on the display. Each time the user depresses one of the cursor control keys, the system responds by moving a cursor displayed on the display one position in an appropriate direction. If one of the cursor control keys is continuously depressed, the system continues to move the cursor in the direction specified by the depressed key until the user releases the key. In this way, cursor position displacement is made dependent upon an input which can be varied over a range (e.g. how long the cursor control key remains depressed). Nevertheless, the basic limitation of the alphanumeric keyboard that the system can only determine whether or not a key has been depressed makes it a clumsy way to point to a position on the system display. For this reason, other keys and/or keystrokes are typically provided to specify position displacements larger than one positional unit (e.g. HOME, TOP, BOTTOM, UP5, DN10, TAB, etc.) to minimize the user time required to move the cursor across the display screen.

Several different companies ( including Logitech, Inc., Mouse Systems Inc. and Microsoft, Inc) have introduced and commercially marketed electronic "mouse" pointing devices which vastly facilitate cursor movement and display position pointing. An electronic mouse pointing device ("mouse") typically includes an element which senses the direction and amount of movement (i.e. displacement) of the mouse across a flat surface, and one or more conventional buttons or switches. Signals generated by the sensing element may be counted by respective x-coordinate and a y-coordinate counters (implemented by a microprocessor or an SSI or MSI digital integrated circuit counting device) and transmitted to a computer system. The computer system typically interprets the transmitted information as the change in the physical position of the mouse on the flat surface since the last time postional information was communicated by the mouse to the system. The computer system typically controls cursor movement in accordance with the information specifying mouse displacement, but could, of course, use the information in any manner desired under software control (for example, the computer system could initiate the execution of a task based upon whether or not the mouse had been moved, whether it had been moved in a predetermined direction and/or a predetermined distance, whether the user has traced a particular shape or symbol with the mouse, etc.).

Predetermined commands can be executed by the system in response to depression of the mouse buttons. Software executing on the computer system can dedicate each of the mouse buttons to a particular function, or it can make the significance of depression of a mouse button depend upon one or more variables (such as present cursor position, history of previously-executed commands, etc.).

Interaction between a user and a computer system is greatly facilitated by using a mouse to "point" to positions on the display. Provided that the mouse samples the signals produced by its movement sensor and transmits that information to the computer system at a sufficiently high rate, it appears to the user that the position of the cursor on the display is directly dependent upon the position of the mouse on the flat surface. The ratio of display cursor displacement to physical mouse displacement may be selected under software control so the user can specify cursor position to a desired resolution while enabling the user to move the display cursor from one side of the display to the other very rapidly by merely moving the mouse a short distance across the flat surface.

Conventional mouse pointing devices ("mice") are connected to the computer system which they serve via cables. Either serial or parallel communication of information via the cable can be used, although serial communication is typically used to decrease the number of conductors within the cable. The cable provides power to the components in the mouse as well as a data transmission path through which the mouse communicates with the computer system. Unfortunately, the cable often interferes with the free movement of the mouse across the surface on which it rests, and may become entangled with, knock over or otherwise disturb other objects resting on the surface.

Portable input peripheral devices which communicate with a computer system via free space are known. For example, International Business Machines, Corp. for a while produced the IBM PC, Jr. computer system. The PC, Jr. system comprises a computer processing unit and a portable battery-operated alphanumeric keyboard which is capable of transmitting input data to the processing unit from a remote location via infrared radiation. A single infrared beam emitter is provided on a front surface of the alphanumeric keyboard and an infrared beam receiver is provided on the processing unit. A user may sit several feet away from the processing unit with the keyboard resting in his or her lap or on a table and comfortably interact with the system. The single remote keyboard provided with the PC, Jr. system has a single dedicated function, however. Other peripheral devices must be connected to the processing unit via conventional cabling if they are to be used with the system.

## Summary of the Invention

The present invention is an apparatus for sensing positional changes and for communicating those positional changes to a computer system. A housing is adapted to be movably disposed on a surface. A sensing device responsive to the movement of the housing over the surface senses the displacement of the housing with respect to the surface. A wireless transmitter communicates the sensed displacement across free space. The communication is adapted to be received by a receiver located remotely to the housing.

The apparatus preferably further includes batteries disposed in the housing which apply power to the sensing device and to the transmitter. A power conserving device preferably disconnects the power applied to at least one of the transmitter and the sensing device once a predetermined time has elapsed since the last time that the housing was displaced with respect to the surface. The power conserving device preferably produces a sleep signal when the predetermined time has elapsed. The sleep signal is transmitted by the transmitter before the power conserving device disconnects power from the transmitter. The power conserving device preferably reconnects power to the disconnected ones of the transmitter and the sensing device when the housing is manipulated by the user in a predetermined manner. The apparatus preferably includes at least one button which produces a signal when manipulated by the user. The power conserving device reconnects power to the disconnected ones of the transmitter and the sensing device in response to the manipulation of the button by the user.

The transmitter preferably includes a device which produces a beam of radiation and a device which varies the beam in response to the sensed displacement. The beam-varying device preferably includes an oscillator which produces a periodic signal having a predetermined frequency and a modulator which varies the periodic signal in response to the sensed displacement. The varied periodic signal is preferably used to vary the beam of radiation.

The apparatus preferably further includes a device which monitors the voltage produced by the batteries. The transmitter communicates indicia of the monitored voltage to the receiver. The voltage-monitoring device may comprise a low-voltage sensing device which produces a signal when the level of the output of the batteries falls below a predetermined level.

In another embodiment, an apparatus in accordance with the present invention includes a sensing device which senses at least one parameter other than movement of the housing over a surface and depression of a button. The apparatus initiates communication to a computer in response to any one or more of the movement of the housing, the manipulation of the buttons and a change in the parameter sensed by the sensing device.

The information processor may process information which it receives from the transmitter. A display device preferably displays an image produced by the information processor. A pointer, the position of which is determined by the received sensed displacement information, is preferably displayed by the display. This pointer may be a cursor.

### Brief Description of the Drawings

A preferred exemplary embodiment of the present invention will now be described in connection with the accompanying sheets of drawings wherein:

FIGURE 1 is an elevated front view in perspective of the presently preferred exemplary embodiment of a system in accordance with the present invention;

FIGURE 2 is a schematic diagram of the mouse pointing device shown in FIGURE 1;

FIGURE 3 is a top view in plan of the orientation of the infrared light emitting diodes shown in FIGURE 2;

FIGURE 4 is a flowchart of the algorithm performed by the microprocessor shown in FIGURE 2;

FIGURE 5 is a graphical illustration of the information packet format transmitted by the mouse pointing device shown in FIGURE 2; and

FIGURE 6 is a block diagram of the information processing device shown in FIGURE 1.

### Detailed Description of the Preferred Embodiment

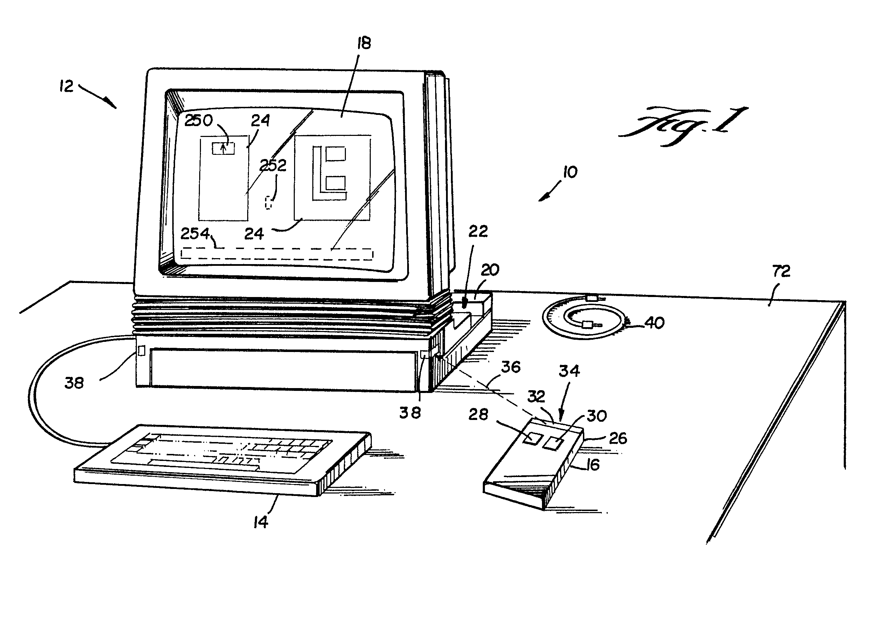

FIG. 1 shows the presently preferred exemplary embodiment of an information processing system 10 in accordance with the present invention. System 10 mainly comprises a base station 12, an alphanumeric keyboard 14 and a mouse pointing device ("mouse") 16. Base station 12 includes a display 18 conventional in design (such as a cathode ray tube) and a recharging base 20. A depression or "cradle" 22 is defined in recharging base 20. Cradle 22 has dimensions such that it physically accepts mouse 16. Mouse 16 is disposed in cradle 22 of recharging base 20 when the mouse is not in use. Recharging base 20 recharges the batteries contained in mouse 16 and provides a storage receptacle which protects the mouse from damage and prevents it from being lost when it is not in use.

In the preferred embodiment, base station 12 is linked to a remote digital data processing device (the link may be accomplished in a conventional manner such as by a high-speed data transmission network). However, it will be understood that a data processing device could be physically incorporated into base station 12 provided that enough space is available. Base station 12 permits a human user to interact with the data processing device through display 18, mouse 16 and alphanumeric keyboard 14.

The data processing unit causes one or more images 24 to be displayed by display 18. Images 24 are displayed in a conventional manner, and serve to provide the user with information about the status of the data processing device. Images 24 may, for example, comprise error messages, command selection menus, etc. Images 24 also are used to permit the user to view the results of tasks performed by the data processing device.

The user may type commands or other information on alphanumeric keyboard 14. Alphanumeric keyboard 14 (conventional in design) communicates the information typed by the user to base station 12, which in turn communicates the information to the data processing device. As is well known, the data processing device may respond to the information entered via alphanumeric keyboard in a number of ways depending upon the nature of the information entered and the particular software application program presently being executed by the data processing device. For example, alphanumeric keyboard 14 might be used to input text which is to eventually become a file stored on a conventional memory device (not shown) connected to the data processing device, or it can be used to type in alphanumeric command strings which cause the data processing device to perform particular tasks.

Mouse 16 is used to input positional information into the data processing device. Mouse 16 comprises a housing 26 (made of a rigid, durable material such as impact-resistant molded plastic) upon which is disposed a left button 28 and a right button 30. A lens 32 (which preferably comprises a strip of plastic which is transparent to radiation at infrared frequencies) is disposed on a front surface 34 of housing 16. Radiation carrying information produced by mouse 16 in response to manipulation of the mouse by a user is transmitted through lens 34 over a free space path 36 to one of two lenses 38 disposed on base station 12. Base station 12 includes a receiver which extracts the information transmitted by mouse 16 over free space path 36 and passes it along to the data processing device, as will be explained in greater detail shortly. A cord 40 may optionally be used in the preferred embodiment to communicate information from mouse 16 to base unit 12 and to conduct power from the base station to the mouse to power the components of the mouse and to recharge the batteries contained in the mouse (as will likewise be discussed in greater detail shortly).

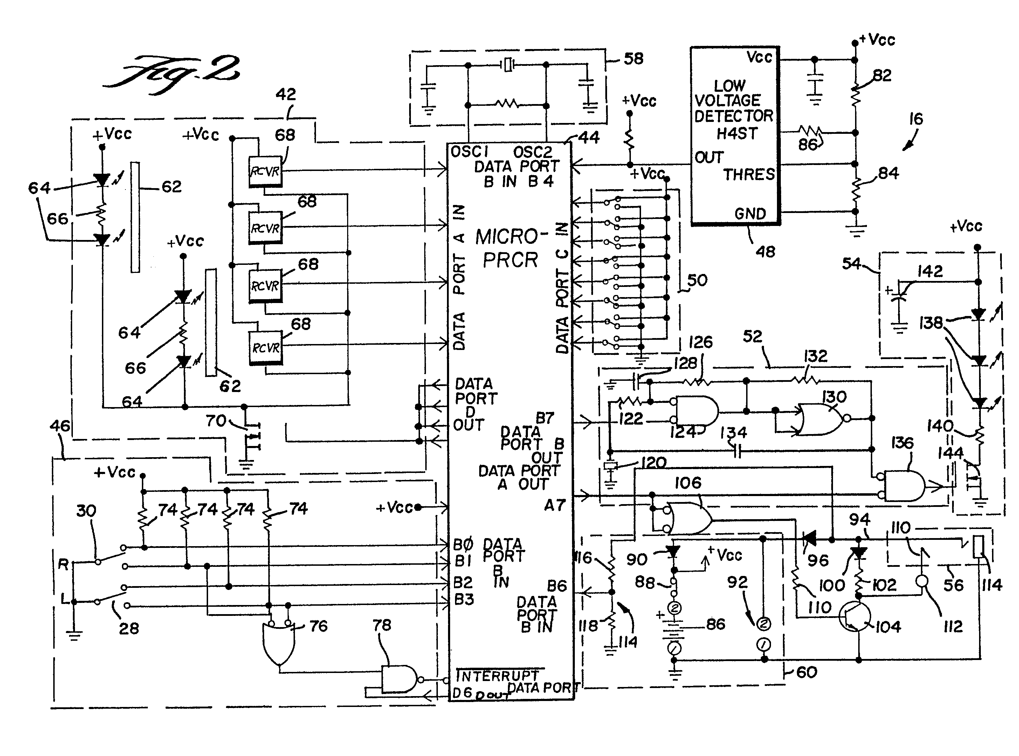

FIG. 2 is a schematic diagram of mouse 16. Mouse 16 mainly comprises an optical movement sensor 42, a microprocessor 44, a switching circuit 46, a low voltage detector 48, a power-on mode selector 50, a subcarrier generator 52, an infrared (IR) transmitter 54, a connector 56, an oscillator 58 and a power supply 60. Each of the blocks listed above will now be described individually in greater detail.

Optical movement sensor 42 comprises a pair of movement sensing wheels 62, light emitting diodes (LEDs) 64, resistors 66, conventional optical receivers 68 and a field effect transistor (FET) 70. Wheels 62 of optical movement sensor 42 are operatively coupled to a ball (not shown) disposed in housing 26 of mouse 22 and protruding from the bottom of the housing through an aperture defined in the housing. When mouse 16 is moved by a user across a flat surface 72, the ball protruding from the bottom of housing 26 rotates in a direction and amount directly proportional to and determined by the direction and amount of movement (i.e., displacement) of the mouse over surface 72. Wheels 62 are mechanically connected to the rolling ball, and preferably rotate at right angles to one another together with the ball in a conventional manner. Thus, displacement of housing 26 across surface 72 in different directions (the direction of housing movement causing rotation of one of wheels 62 being at right angles to the direction of movement causing the rotation of the other one of the wheels) causes wheels 62 to rotate at different rates.

Wheels 62 are perforated about their peripheries by a plurality of evenly-spaced apertures. LEDs 64 connected in series with a current limiting resistor 66 are disposed on one side of each of wheels 62. A pair of optical receiving units 68 are disposed on the side of each of wheels 62 opposite the side on which LEDs 64 are disposed. Each of optical receiving units 68 is placed in registry with a different one of LEDs 64. In the preferred embodiment, receivers 68 each comprise a conventional integrated circuit device (1S433) which is sensitive to light and produces a buffered output signal (at logic levels) indicating whether light is striking the receiver. As is well known in the art, wheels 62 interrupt light travelling over a path from LED 64 to receivers 68 as they rotate. The logic level output signals produced by receivers 68 thus comprises a train of pulses from which the displacement of housing 26 across surface 72 can be determined.

Of course, optical position encoding techniques are well known in the art, and any such position encoding technique can be used in accordance with the present invention. Indeed, a mechanical or electromagnetic movement sensor (or any other sort of movement sensor for that matter) could be substituted for optical movement sensor 42 with good results. Optical movement sensor 42 as so far described is entirely conventional and can be purchased from several different manufacturers (including Logitech, Inc.).

LEDs 64 and receivers 68 are, of course, active devices requiring power to function. These devices are each connected to the output of power supply 60 $V_{cc}$ and are grounded via FET 70. The gate of FET 70 is connected to DATA PORT D OUT of microprocessor 44. When microprocessor 44 produces a logic level 1 signal on DATA PORT D OUT, FET 70 conducts and thereby turns on LEDs 64 and receivers 68. The outputs of receivers 68 are applied to DATA PORT A IN of microprocessor 44 where they can be read and analyzed.

Switching circuit 46 comprises conventional push-button switches 28 and 30, pull-up resistors 74, NAND gate 76 and NAND gate 78. Switches 28 and 30 are each single-pole double-throw (SPDT) switches, the center poles of which are connected to ground and the end poles of which are connected to a respective data input of DATA B PORT IN of microprocessor 44. The end poles of switches 28 and 30 are each pulled up to $V_{cc}$ by a respective pull-up resistor 74. Switches 28 and 30 in the preferred embodiment are spring loaded such that the B0 and B2 inputs of DATA PORT B IN are at logic level 0 when the switches are not depressed and rise to logic level 1 when the switches are depressed. Likewise, inputs B1 and B3 of DATA PORT B IN are at logic level 1 when switches 28 and 30 are not depressed, and fall to logic level 0 when the switches are depressed. By reading the data available on its DATA PORT B IN input port, microprocessor 44 can determine whether or not switches 28 and 30 are depressed.

Each of the signals applied to the B1 and B3 inputs of microprocessor 44 are also applied to a different input of a NAND gate 76. The output of NAND gate 76 is applied to an input of another NAND gate 78 the output of which is applied to an interrupt input of microprocessor 44. The other input of NAND gate 78 is connected to the D6 DATA PORT D OUT output of microprocessor 44. NAND gate 78 enables the interrupt input of microprocessor 44 (of course, if the microprocessor has internal interrupt enable and disable, external gate 78 would not be necessary). When the D6 output of microprocessor 44 is high (logic level 1), the depression of either of switches 28 and 30 will cause a hardware interrupt of the microprocessor to occur (the function of which will be explained in greater detail shortly).

Oscillator circuit 58 determines the rate at which microprocessor 44 operates. Power-on mode selector 50 is simply a plurality of hard-wired jumpers which apply a predetermined binary number to the DATA PORT C IN input of microprocessor 44. Microprocessor 44 is a conventional single-chip microprocessor (e.g.,

a MC 1468705G2 manufactured by Motorola, Inc.).
Microprocessor 44 includes a number of conventional
facilities such as power-on mode set capability and
sleep mode.  Microprocessor 44 contains an internal
read only memory (ROM) from which it executes program
instructions in a well-known manner.

When power is first applied to microprocessor
44, the microprocessor initially reads the binary
number applied to its DATA PORT C IN input and
thereafter utilizes that information to determine which
of a plurality of different software routines stored in
the ROM internal to the microprocessor will be executed
and/or which of a plurality of different hardware
options will be selected.  In this way, microprocessor
44 can be provided with a number of different optional
functions which may be changed by simply rearranging
the configuration of the jumpers of power-on mode
selector 50.  It may occasionally be necessary to turn
power to microprocessor 44 off and on several times to
ensure the microprocessor begins operating in the
correct mode.

Low-voltage detector unit 48 monitors the
output voltage of power supply 60 and applies a low
voltage indicating signal to the B4 DATA PORT B IN
input of microprocessor 44.  Low voltage detector 48
may comprise a conventional low voltage detector
integrated circuit such as an ICL8211.  A voltage
divider comprising a resistor 82 connected in series
with a resistor 84 is connected between the output
voltage $V_{cc}$ of power supply 60 and ground potential.
The junction of resistors 82 and 84 is connected to the
sense input of low voltage detector 48 (directly, and
through a series resistor 86 if hysteresis is desired,
as is well-known).  Low voltage detector 48 compares
the voltage level applied to its sense input with an internal reference voltage derived from the voltage applied to its $V_{CC}$ input, and produces a logic level 0 signal at its output terminal OUT when the voltage level applied to its sense input falls below the reference voltage. The values of resistors 82 and 84 are selected so that an output signal is generated by low voltage detector 48 when the voltage produced by power supply 60 falls below a predetermined voltage. As is well-known, the voltage produced by a nickelcadmium or zinc-carbon cell falls as the cell is discharged and its current-carrying capability decreases. Thus, the condition of power supply 60 (which is battery-powered, as will be explained) can be determined by monitoring its output voltage level.

Low voltage detector 48 applies an output signal to microprocessor 44 when it senses that the output voltage of power supply 60 has fallen to a level so low that the mouse 16 will cease to operate properly unless either the battery of the power supply is soon recharged or unless the mouse is supplied with power from an external source.

Power for optical movement sensor 42, microprocessor 44, switching circuit 46, low-voltage detector 48, power-on mode selector 50, subcarrier generator 52 and IR transmitter 54 is provided by power supply 60. In the preferred embodiment, power supply 60 mainly comprises batteries 86. Batteries 86 may comprise a plurality of conventional AA cells which are connected in series to provide a desired voltage output (four such AA cells connected together in series are used in the preferred embodiment). Batteries 86 are connected via a switch 88 to the $V_{CC}$ inputs of the components of mouse 16. Switch 88 is normally closed but may be opened to conserve battery power if mouse 16 is not to be operated for a long period of time (such as during shipment).

Batteries 86 are also connected in series with a diode 90. The series-connected circuit of diode 90 and batteries 86 are connected across a pair of electrodes 92 which are positioned on the bottom of housing 26 of the mouse 16. Electrodes 92 may comprise two screws used for holding top and bottom halves of housing 26 together. When mouse 16 is disposed in cradle 22 of base station 12, a set of charging contacts disposed in the cradle make electrical contact with electrodes 92. Base station 12 thus provides charging current to electrodes 92 whenever mouse 16 is disposed in its cradle 22 so that batteries 86 will be fully charged. Of course, many other ways of recharging batteries 86 (such as solar cells disposed on the outside of housing 26) could be used in lieu of charging contacts 92. Diode 90 prevents batteries 86 from discharging when electrodes 92 are accidentally shorted together.

A power pin 94 of connector 56 is connected through a diode 96 to the series-connected circuit of diode 90, switch 88 and batteries 86. When one end of cord 40 is plugged into connector 56 and the other end of the cord is plugged into a connector 98 (yet to be described) disposed on base station 12, power is supplied by the base station through the cord to power pin 94. The power applied to power pin 94 is optionally used to power all of the components of mouse 16 and is also used to recharge batteries 86. For instance, if mouse 16 is operated in a cordless mode for a sufficient period of time, batteries 86 will discharge to a level so low that the mouse will cease to operate properly unless batteries 86 are soon recharged. Cord 40 may be connected at this time to permit the user to continue to operate mouse 16 and to recharge batteries 86 simultaneously.

Power pin 94 also applies power through a diode 100 and a resistor 102 to the collector of a transistor 104. During operation with a cord 40, the serial data output of microprocessor 44 (which is applied to the base of transistor 104 through a NAND gate 106 operating as an inverter and buffer and through a resistor 110) is buffered and level-shifted by transistor 104. The buffered and level-shifted output of transistor 104 is connected to a data pin 110 of connector 56 through a ferrite bead 112 (the ferrite bead is used to prevent RF energy from escaping from housing 26 onto cord 40 and radiating therefrom). A ground ring 114 of connector 56 serves as a common ground for both the power applied to power pin 94 and the logic level signals applied to data pin 110. Isolation diode 96 prevents power produced by batteries 86 from reaching transistor 104 so that the transistor only receives power when an active cord 40 is plugged into connector 56.

Power pin 94 is connected directly to a voltage divider 114 comprising series-connected resistors 116 and 118. The other end of voltage divider 114 is connected to ground potential, while the junction point of resistors 116 and 118 is connected to the B6 DATA PORT B IN input of microprocessor 44. The values of resistors 116 and 118 are selected so that the logic level 1 signal is applied to the B6 input when power is applied to power pin 94 of connector 56. By polling the signal level at its B6 input, microprocessor 44 can determine if an active cord 40 is plugged into connector 56.

A B7 DATA PORT B OUT output of microprocessor 44 is connected to an enable input of subcarrier generator 52. Subcarrier generator 52 in the preferred embodiment comprises an oscillator controlled by a piezoelectric resonator 120 connected through a series resistor 122 to an input of a NAND gate 124. The other input of NAND gate 124 is connected to the B7 output of microprocessor 44. The output of NAND gate 124 is connected back to one of its inputs via a resistor 126. The input of NAND 124 to which resistors 122 and 126 are both connected is also shunted to ground by a capacitor 128 which is selected to have a value such that subcarrier generator 52 reliably oscillates at the fundamental frequency of resonator 120. The output of NAND gate 124 is also connected to the two inputs of a NOR gate 130 (the two inputs being tied together). The output of NOR gate 130 is connected back to its inputs through a resistor 132 and is also connected to resonator 120 through a capacitor 134. Subcarrier generator 52 produces a symmetrical square wave of a predetermined frequency at the output of NOR gate 130 which is applied to an input of a NAND gate 136. In the preferred embodiment, resonator 120 has a frequency of 455 kilohertz, so that the output of NOR gate 136 has a stable frequency of 455 kilohertz.

The other input of NAND gate 136 is connected to the A7 output of microprocessor 44. The output A7 of microprocessor 44 is used to gate the output of subcarrier generator 52 according to the serial data output present on the A7 output of the microprocessor. The output of NAND gate 136 is connected to the input of IR transmitter 54.

IR transmitter 54 comprises infrared light emitting diodes (LEDs) 138, a resistor 140, a capacitor 142 and a field effect transistor (FET) 144. LEDs 138 are connected in series together with current-limiting resistor 140. One end of the series-connected circuit comprising LEDs 138 and resistor 140 is connected to $V_{cc}$, while the other end is connected to ground through FET 144. Capacitor 142 is connected in parallel with the above-described series-connected circuit to help prevent fluctuations in $V_{cc}$ from affecting LEDs 138. The gate of FET 144 is connected to the output of NAND gate 136 (previously described) so that LEDs 138 will turn on whenever the NAND gate produces a logic-level 1 signal and will be off otherwise.

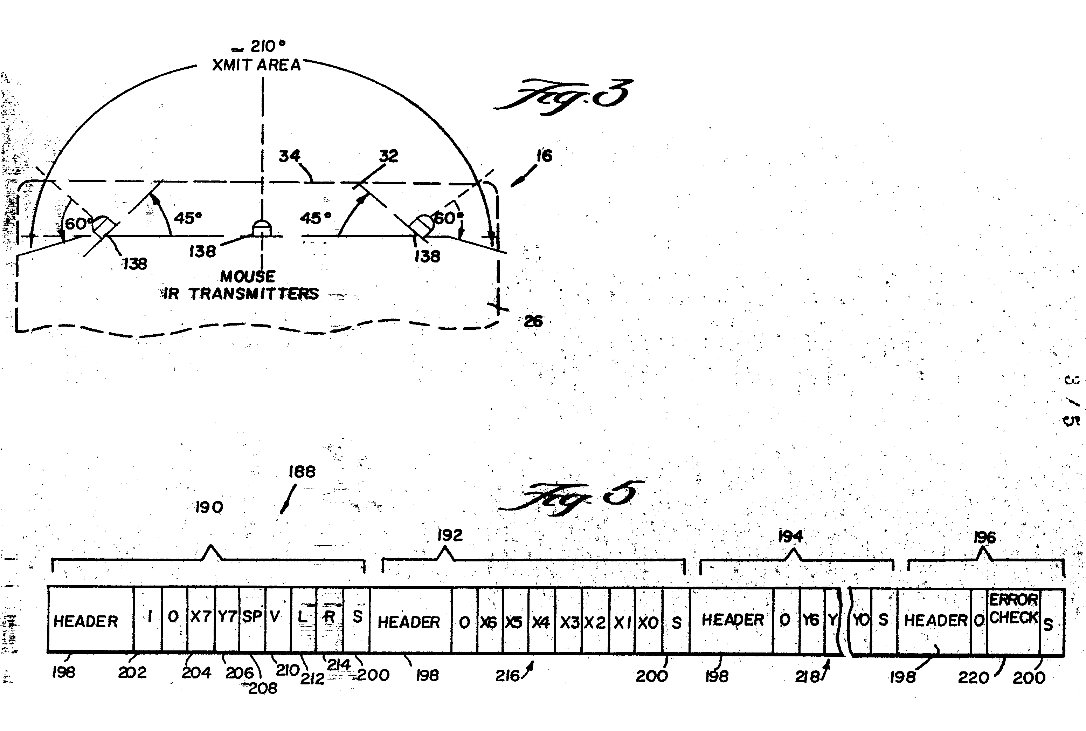

As mentioned previously, LEDs 86 are housed behind a filtered plastic lens 32 which protects the LEDs from damage and prevents physical contact between the user's hand and the LEDs from causing data to be transmitted improperly by IR receiver 54. As is shown in FIG. 3, LEDs 138 are arranged at predetermined angular orientations with respect to a direction normal to front surface 34 of housing 26. The LEDs 138 are arranged in an array such that one of the LEDs faces directly forward through lens 32, while each of the other two LEDs are directed at an angle 45 degrees offset from a direction normal to the surface of the lens. The LEDs 138 (which are commercially available LD 242-3 LEDs in the preferred embodiment) each have an angle of directivity of approximately 120 degrees (i.e., sixty degrees from either side of a vector normal to the LED). Thus, the total transmission directivity of infrared transmitter 54 is 210 degrees, permitting the housing 26 to be oriented in many different positions with respect to lenses 38 of base station 20 while still assuring reliable reception.

Because LEDs 138 are connected in series, the power of the infrared radiation emitted from the LEDs (the wavelength of which is 950 nanometers in the preferred embodiment) is substantially lessened. The range of infrared transmitter 54 in the preferred embodiment is thus limited to approximately 2 feet, which is more than adequate for most applications. LEDs 138 are connected in series with one another primarily to conserve the power of battery 86. However, if increased range is desired, LEDs could be connected in parallel with one another, could be increased in number, etc.

As described previously, subcarrier generator 52 is enabled by the B7 output of microprocessor 44, causing the subcarrier generator to produce a square-wave signal having a frequency of approximately 455 kilohertz. This 455 kilohertz signal is gated (i.e., turned on and off) by data applied by microprocessor 44 to its A7 output. This gated signal is used to switch the infrared radiation produced by IR transmitter 54 on and off. Hence, the serial data output produced by microprocessor 44 is used to vary the output of sub-carrier generator 52, which in turn is used to vary the output of infrared transmitter 54.

Of course, subcarrier generator 54 could comprise any known type of oscillator (such as a sine-wave oscillator operating at a fixed frequency), and gate 136 could be replaced by a more complex modulator (such as a frequency modulator, phase modulator, amplitude modulator, etc.). Subcarrier generator 52 could be omitted entirely, and the serial data output of microprocessor 44 could be used to directly switch LEDs 138 on and off. Subcarrier generator 52 is provided in the preferred embodiment to permit base station 12 to distinguish between signals received from other peripheral devices (which either do not include a subcarrier generator 52 or utilize a subcarrier generator operating at a different frequency from the subcarrier generator 52 of mouse 16). Likewise, infrared transmitter 54 could be replaced by any known device capable of transmitting a signal across free space (such as an ultrasonic transducer, a RF oscillator, a conventional laser, etc.).

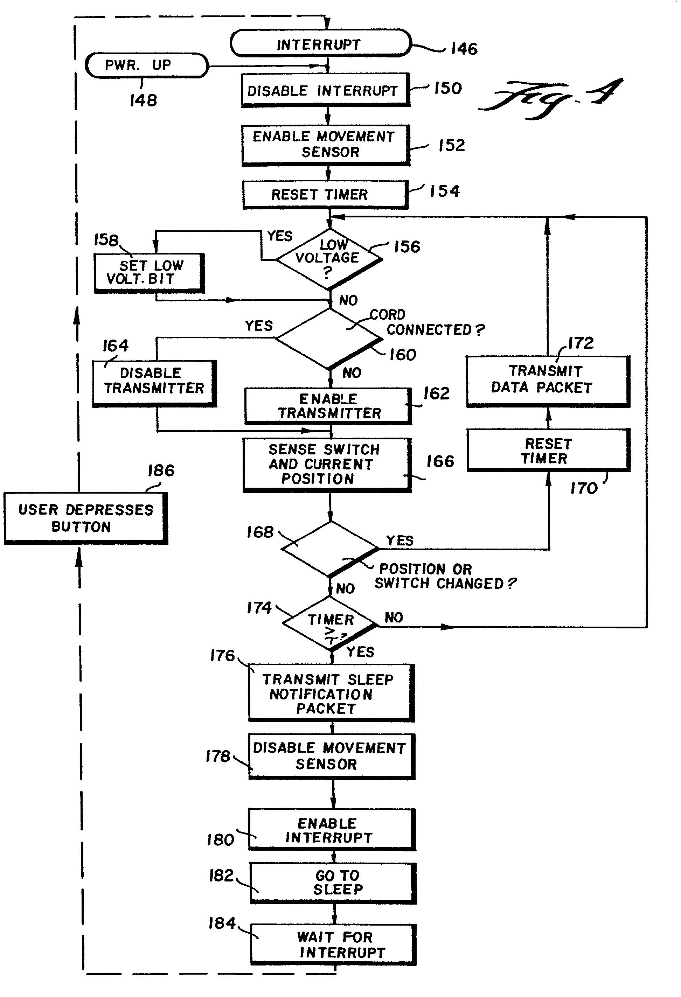

The flowchart of the steps performed by microprocessor 44 in the preferred embodiment is shown in FIG. 4, and can best be understood by referring to both FIGs. 2 and 4 simultaneously. Upon powering up mouse 16 (i.e., closing switch 88), microprocessor 44 begins executing microprogramming from its internal ROM which specifies the steps shown in blocks 150-184 of FIG. 4. When first powered up, microprocessor 44 disables its interrupt input (block 150) by applying a logic level 0 output to its D6 output. Microprocessor 44 then enables movement sensor 42 by applying logic level 1 output to its DATA PORT D OUT output (block 152), thereby turning on FET 70 (it will be noted that blocks 150 and 152 may be performed simultaneously). A timer internal to microprocessor 44 is then reset in a known manner (block 154). The timer reset by block 154 is a free-running timer which increments automatically at a rate determined by oscillator circuit 58. Decision block 156 determines if the voltage level produced by batteries 86 is below a predetermined level by reading in the output of low voltage detector 48 (which is applied to the B4 input of microprocessor 44) (block 156). If a low voltage condition exists, a low voltage bit in a serial ouput packet being prepared for transmission by mouse 16 is set (block 158); otherwise, the low voltage bit remains unset. Decision block 160 determines if an active cable 40 is connected to connector 56 by determining the level of the B6 input of the microprocessor 44. If the B6 input is at logic level 1, microprocessor 44 disables the subcarrier generator 52 by applying a logic level 0 signal to the B7 output (block 164) . This step has the effect of disabling IR transmitter 54 (since an active cord 40 is connected to connector 56, the user has selected operation with a cord and data is transmitted via the cord rather than through free space). If an active cord is not connected to connector 56, microprocessor 44 will apply a logic level 1 signal to output B7, thereby enabling subcarrier generator 52 and IR transmitter 54 (block 162).

Microprocessor 44 next senses the current position of housing 26 by reading in the output signals of receivers 68 via DATA PORT A IN. Microprocessor 44 preferably reads the output signals from receiver 68 at a sufficient rate such that no information is lost even if housing 26 is moved very rapidly across surface 72 (in the preferred embodiment, oscillator circuit 58 is configured such that microprocessor 44 performs block 166 78 times per second). Microprocessor 44 also reads in the signals applied to its DATA PORT B IN input (B0-B3) to determine if one of switches 28 and 30 has been depressed. If one of switches 28 and 30 has been depressed, microprocessor 44 will software debounce the inputs in a conventional manner (it will be noted that because block 150 disabled the microprocessor interrupt input, the depression of one of switches 28 and 30 will not cause an interrupt).

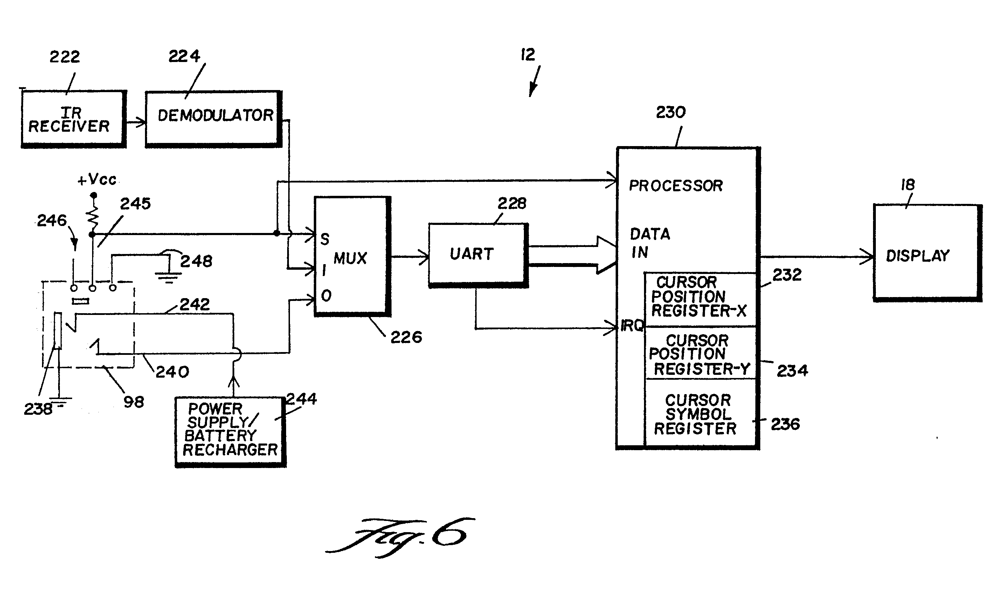

Microprocessor 44 preferably loads the information read from DATA PORT A IN and inputs B0-B3 into one or more internal registers and compares them with data which was read in through these same input ports previously and stored in another set of internal registers (or in an internal random access memory, as is well known). If the position of housing 26 has changed (determined by comparing the newly-read-in value with the previous value, preferably taking into account small differences in the two values which might be caused by vibration of surface 72) (block 168), the internal timer is reset (block 170) and a serial data packet is output via DATA PORT A OUT A7 output (block 172). This data packet is communicated to base station 12 (either via IR transmitter 54 or via connector 56 and cord 40 if cord 40 is connected). The data format of the data packet transmitted by block 172 will be described in detail in conjunction with FIG. 5 shortly.

If decision block 168 determines that neither of switches 28 and 30 have been depressed and that the position of housing 26 on surface 72 has not changed appreciably, decision block 174 compares the value of its internal timer with a predetermined value (e.g., 60 seconds in the preferred embodiment). If the value of the timer does not exceed the predetermined value, then microprocessor 44 jumps to block 156 to once again determine if batteries 86 are outputting a voltage having a level below a predetermined level. Thus, the loop comprising blocks 156-174 is executed repeatedly by microprocessor 44 as long as mouse 16 is "awake".

If the value of the timer exceeds the predetermined value (as determined by block 174), the mouse will "go to sleep" (i.e. shut off some of its circuits) in order to conserve battery power. First, a sleep notification packet is transmitted to base station 12 by block 176. The transmission of this sleep notification packet is <u>not</u> initiated by manipulation of housing 26 or buttons 28 and 30 by the user, but, in contradistinction, is initiated by the user having <u>failed</u> to manipulate both the housing and the buttons for a predetermined period of time. The sleep notification packet is transmitted to inform base station 12 (and ultimately the user) that the mouse has gone to sleep and must be awakened before it can be used once again. Block 178 disables movement sensor 42 by writing logic level 0 to DATA PORT D OUT (to turn off FET 70). Of course, IR transmitter 54 will also be inactive at this time bacause there is no data being output at the A7 output of the microprocessor. Microprocessor 44 then enables its interrupt input by writing a logic level 1 to its D6 output (block 180) (this step may be performed at the same time as step 178).

Microprocessor 44 then executes block 182 to cause the microprocessor itself to go to sleep in a conventional manner to conserve power. The microprocessor used in the preferred embodiment itself has a conventional sleep mode; once the microprocessor is asleep, it can be awakened only by applying an interrupt signal to its interrupt input (block 184).

When the mouse is asleep, movement sensor 42 and IR transmitter 54 are all turned off, as is most of the microprocessor itself. The movement of housing 26 across surface 72 will not cause information to be sent from the mouse to base station 12. To awaken the mouse 16, a user must depress either one (or both) of buttons 28 and 30 (block 186). The depression of one of buttons 28 and 30 will cause a signal to be applied to the interrupt input of microprocessor 44 (block 146), which will cause the microprocessor to wake up and begin executing instructions begining at block 150. While in the sleep mode, mouse 16 draws very little current (only 300-500 microamps in the preferred embodiment), enabling the mouse to remain out of cradle 22 for days and even weeks at a time without exhausting batteries 86.

Of course, ways to awaken mouse 16 other than by depressing one of buttons 28 and 30 are possible: an auxilliary passive movement sensing switch (such as a conventional mercury switch) which simply senses whether mouse 16 has been moved could be used to produce an interrupt, or a capacitive sensor could sense the proximity of a user's hand to housing 26 and likewise cause an interrupt to occur. Moreover, the flow of the steps shown in FIG. 4 could be easily modified to make entering of the sleep mode by mouse 16 dependent upon the condition that an active cord 40 is not plugged into connector 56 (as there would be little reason to conserve power if such was the case). Moreover, depending upon user requirements, the detection of a low voltage by block 156 could immediately cause a low voltage notification packet to be sent to base station 12 and the mouse 16 could thereafter go into the sleep mode if desired to prevent further exhaustion of batteries 86.

The format of a data packet 188 produced at the A7 output of microprocessor 44 is depicted in FIG. 5. Data packet 188 comprises four sub-packets 190, 192, 194 and 196 each of which are of equal length in the preferred embodiment. Sub-packet 190 contains status information, sub-packet 192 contains information specifying displacement of housing 26 in the X-coordinate direction, sub-packet 194 contains information specifying the displacement of the housing in the Y-coordinate direction, and sub-packet 196 contains error-checking information. Each of sub-packets 190-196 begins with a header field 198 (which may comprise one or more start bits and an even parity bit) and ends with a stop bit 200. Thus, each of sub-packets 190-196 are transmitted in standard UART-to-UART protocol. Although subpackets 190-196 are shown in FIG. 5 as being contiguous, it will be understood that they could be transmitted individually with intervals of time separating them. Likewise, any sort of protocol format can be used which conveys the same status, data and error-checking information conveyed by the format shown in FIG. 5. Indeed, it might be desirable to include all of the information transmitted into a single, relatively long packet to cut down on transmission time and formatting overhead. Moreover, mouse 16 could include a conventional data compression or encoding circuit which encodes the information to be transmitted in a smaller number of bits to further reduce transmission time.

Sub-packet 190 includes a first set bit 202 directly following header 198 to distinguish it as the first subpacket trasmitted in packet 188. Each of sub-packets 192, 194 and 196 have a 0 in this position. Sub-packet 190 includes the highest order bits of the internal counters of microprocessor 44 (which in the preferred embodiment are the sign bits of the counters, and thus indicate the direction which housing 26 was displaced on surface 72) in fields 204 and 206. A sleep field 208 one bit long is set whenever the packet 188 is a sleep notification packet (the setting of this bit is initiated by block 176), and is otherwise unset. A low-voltage field 210 one bit long is set by block 158, and is otherwise unset. Fields 212 and 214 (each one bit long) are set if switches 28 or 30 have been depressed, respectively.

Sub-packet 192 contains an X-coordinate information field (X6-X0) which specifies the magnitude of displacement of housing 26 in the X-coordinate direction. Sub-packet 194 contains 7 bits of information in a Y-coordinate field 218 which specifies the magnitude of displacment of housing 26 in the Y-coordinate direction (it will be noted that the X-coordinate and Y-coordinate fields can be made to any length desired consistent with desired resolution). Sub-packet 196 contains an error-checking field 220 (preferably 7 bits long for the sake of uniformity) which contains error-checking information (of a conventional type, such as cyclical redundancy checking, etc.). Error-checking field 220 provides information to base unit 12 about any transmission errors which have occurred, and is produced by microprocessor 44 in a well-known manner.

FIG. 6 is a block diagram of base station 12. Base station 12 comprises an infrared (IR) receiver 222, a demodulator 224, a multiplexer (MUX) 226, a UART 228, a connector 98 and a processor 230. Processor 230 is a conventional processor having an internal (hardware or software) X-coordinate cursor position register 232, Y-coordinate cursor position register 234 and cursor symbol register 236. Processor 230 produces images 24 to be displayed on display 18. Processor 230 may also perform a plurality of other conventional functions.

Connector 98 is adapted to receive cord 40. When cord 40 is connected at one end to connector 98 and at its other end to connector 56 of mouse 16, a ground ring 238 is connected to ground ring 114 of connector 56, a data pin 240 is connected to data pin 94 of connector 56, and a power pin 242 is connected to power pin 94 of connector 56. A power supply/battery recharger 244 connected to power pin 242 of connector 98 applies power to cord 40 for recharging batteries 86 of mouse 16 and for powering the various components of the mouse. The center pole 245 of a switch 246 integral to connector 98 is at logic level 1 when no cord 40 is plugged into connector 98, and is at logic level 0 (i.e., grounded by an end pole 248) when the cord is inserted. The center pole 245 of switch 246 is applied to the select input of MUX 226 to select as a data input the output from IR receiver 222. The signal on center pole 245 is also applied directly to processor 230 so that the processor is aware of whether mouse 16 is operating in its cordless mode or with a cord. If cord 40 is inserted into connector 98, a logic level 0 is applied to the select input of MUX 226 and the MUX selects the data pin 240 of connector 98.

IR receiver 222 receives the infrared radiation transmitted by IR transmitter 54 of mouse 16 and converts it into electrical signals. IR receiver 222 may comprise one or more arrays of back-biased infrared diodes and appropriate buffers. Demodulator 224 receives the output of IR receiver 222 and extracts the data packet 188 from the 455 kilohertz subcarrier. Demodulator 224 may comprise a conventional broadcast band AM radio IF strip including band pass filters and a detector. Of course, the precise configuration of IR receiver 222 and demodulator 224 depends largely upon the configuration of subcarrier generator 52 and IR transmitter 54 of mouse 16. As discussed previously, many different ways of transforming the serial data output of microprocessor 44 into a signal which can be transmitted via free-space path 36 are possible, and the present invention is by no means limited to any one such method.

The data input selected by MUX 226 is applied to a conventional UART 228 which removes header fields 198 from the sub-packets 190-196 and converts the data from serial to parallel format in a well-known manner. UART 228 applies a signal to the interrupt input IRQ of processor 230 to inform the processor that a valid output is present on the processor's DATA IN input. Processor 230 may then read the data input and process the provided data.

Processor 230 processes the provided data in a generally conventional fashion. Processor 230 causes

**0171747**

display 18 to display images 24 some of which may be dependent on or controlled by the data packet 188 received from mouse 16. Processor 230 causes display 18 to display a cursor 250. The position of cursor 250 on the display 18 may be determined by the X-coordinate field 216 and the Y-coordinate field 218 of data packet 188 (every time processor 230 receives a data packet, it changes the position of the cursor by displacing it on display 18 in an amount proportional to the X-coordinate and Y-coordinate information). If processor 230 receives a data packet 188 with a sleep field 208 which indicates that mouse 16 has gone to sleep, processor 230 removes cursor 250 from display 18 and substitutes for the cursor a unique symbol 252 (such as a square) which informs the user that the mouse has gone to sleep and must be awakened before it may be used.

If a data packet 188 received by processor 230 has a low voltage field 210 which is set (indicating that batteries 86 of mouse 16 are nearly exhausted), processor 230 causes display 18 to display a textual message 254 which warns the user that he or she should either replace mouse 16 back into cradle 22 for recharging or connect cord 40 between base station 12 and mouse 16 if uninterrupted use of the mouse is desired.

Although the exemplary embodiment has been described in detail above, those skilled in the art will appreciate that many variations and modifications may be made without departing from the novel and advantageous features of the invention. For instance, although a mouse pointing device has been described, other computer peripheral devices (both input and output) could advantageously utilize the present invention. Likewise, as described above, the present invention is in no way limited to infrared communication, but rather, any sort of signal which can be communicated across free space could be used instead. Different formats and protocols could be used for data packet 188 depending upon the application. Accordingly, all such variations and modifications are intended to be included in the scope of the claims.

WHAT IS CLAIMED IS:

1. An apparatus for sensing positional changes, said apparatus including:

a housing adapted to be movably disposed on a surface;

a displacement sensor responsive to the movement of said housing over said surface for sensing the displacement of said housing with respect to said surface; and

a wireless transmitter for communicating said sensed displacement across free space, said communication adapted to be received by a receiver located remotely to said housing.

2. An apparatus as in claim 1 further including:

a battery power supply for applying power to said sensor and said transmitter; and

a power conserving circuit for disconnecting said power from at least one of said displacement sensor and said transmitter once a predetermined time has elapsed since the last time said housing was displaced with respect to said surface.

3. An apparatus as in claim 2 wherein:

said power conserving circuit produces a sleep signal when said predetermined time has elapsed; and

said transmitter communicates said sleep signal to said receiver before said power conserving circuit disconnects said power.

31

0171747

4. An apparatus as in claim 2 wherein said power conserving circuit reconnects said power to said one when said housing is manipulated by a user in a predetermined manner.

5. An apparatus as in claim 2 wherein: said apparatus further includes at least one depressable button for producing a signal when manipulated by a user; and said power conserving circuit reconnects said power to said one in response to the signal produced by said button.

6. An apparatus as in claim 1 wherein said wireless transmitter includes: a device for producing a beam of radiation; and a modulator for modulating said beam of radiation with indicia of said sensed displacement.

7. An apparatus as in claim 6 wherein said modulator includes: an oscillator for producing a periodic signal of a first predetermined frequency; a sub-carrier modulator for varying said periodic signal in response to said sensed displacement; and a main carrier oscillator for varying said beam in response to said periodic signal varied by said indicia.

32          0171747

8. An apparatus as in claim 2 wherein:

said apparatus further includes a sensor for monitoring the voltage produced by said battery means; and

said transmitter communicates said monitored voltage to said receiver.

9. An apparatus for communicating positional changes to a computer, including:

a housing adapted to be movably disposed on a surface;

a sensor, responsive to the movement of said housing over said surface, for sensing the displacement of said housing with respect to said surface;

a power supply for providing power to said sensor;

a power conserving circuit responsive to said sensed displacement for disconnecting said power provided to said sensor once a predetermined time has elapsed since said housing has been displaced with respect to said surface; and

a transmitter for communicating said sensed displacement to a computer, said transmitter also communicating indicia of the disconnection of said power supply from said sensor when said predetermined time has elapsed.

10. An apparatus as in claim 9 wherein said power conserving circuit reconnects said power to said sensor once said housing is manipulated by a user in a predetermined manner.

33 0171747

11. An apparatus as in claim 9 wherein:

said apparatus further includes at least one depressable button for producing a signal when manipulated by a user; and

said power conserving circuit reconnects said power to said sensing means in response to the manipulation of said button by a user.

12. An apparatus as in claim 9 wherein:

said apparatus further includes a low voltage sensor responsive to the output of said power supply for producing a signal when the level of said power supply falls below a predetermined level; and

wherein said transmitter also communicates indicia of said signal produced by said low voltage sensing means to said computer.

13. An apparatus for communicating positional changes to a computer, said apparatus including:

a housing adapted to be movably disposed on a surface;

a displacement sensor responsive to the movement of said housing over said surface for sensing the displacement of said housing with respect to said surface;

a power supply for providing power to said displacement sensor;

a low voltage sensor means responsive to the output of said power supply for producing a signal when the level of the output of said power supply falls below a predetermined level; and

a transmitter adapted for communicating said sensed displacement to a computer, said transmitter also communicating said signal produced by said low voltage sensor to said computer.

14. An apparatus for communicating positional changes to a computer, including:

a housing adapted to be movably disposed on a surface;

a first sensor, disposed in said housing and responsive to the movement of said housing over said surface, for sensing the displacement of said housing with respect to said surface;

a depressable button for producing a signal when manipulated by a user;

a second sensor, disposed in said housing, for sensing at least one parameter other than the displacement of said housing with respect to said surface and the manipulation of said button; and

a transmitter adapted for communicating information from said housing to a computer, said transmitter initiating communication with said computer in response to any of the movement sensed by said first sensor, said manipulation of said button by a user and changes in said parameter sensed by said second sensor.

15. A system for processing information comprising:

a housing adapted to be movably disposed on a surface;

a displacement sensor responsive to the movement of said housing over said surface for sensing the displacement of said housing with respect to said surface;

a wireless transmitter for communicating said sensed displacement across free space;

a receiver for receiving said communication produced by said transmitter; and

0171747

an information processor for processing said sensed displacement received by said receiver.

16. A system as in claim 15 further including:

a display for producing a visual image; and

a pointer, operatively connected to said display, for pointing to a position on said displayed image, said position on said displayed image determined in response to said received sensed displacement.

17. A system as in claim 16 wherein said pointer includes:

a circuit for effecting the display of a cursor at a predetermined position in the image produced by said display; and

a circuit for setting said predetermined cursor position in response to said received sensed displacement.

_Fig.1_

Fig-2

≈ 210°
XMIT AREA

*Fig. 3*

34   32   16

60°   45°   45°   60°

138   138   138

MOUSE
IR TRANSMITTERS

26

188

190

*Fig. 5*

192   194   196

| HEADER | I | O | X7 | Y7 | SP | V | L | R | S | HEADER | O | X6 | X5 | X4 | X3 | X2 | X1 | X0 | S | HEADER | O | Y6 | Y | Y0 | S | HEADER | O | ERROR CHECK | S |

198   202   204   206   210   214   200   198   216   200   198   218   198   220   200
208   212

0171747

0171747

Fig. 4

Fig. 6